# EUROPÄISCHE PATENTSCHRIFT

(11) **EP 0 730 489 B1**
(45) Veröffentlichungstag und Bekanntmachung des Hinweises auf die Patenterteilung: **07.05.1997**
(21) Anmeldenummer: 94931563.4
(22) Anmeldetag: 04.11.1994
(51) Int. Cl.: B01D 67/00, B01D 63/06, B01D 65/00, B29C 70/00

(54) **VERFAHREN ZUR PARTIELLEN MODIFIZIERUNG VON PORÖSEN, HYDROPHILEN FILTERMEMBRANEN**
PROCESS FOR THE PARTIAL MODIFICATION OF POROUS HYDROPHYLIC FILTER MEMBRANES
PROCEDE DE MODIFICATION PARTIELLE DE MEMBRANES FILTRANTES POREUSES HYDROPHILES

(30) Priorität: 23.11.1993 DE 4339810
(43) Veröffentlichungstag der Anmeldung: 11.09.1996
(73) Patentinhaber: SEITZ-FILTER-WERKE GmbH, 55543 Bad Kreuznach (DE)
(72) Erfinder: STROHM, Gerhard, D-55278 Dexheim (DE); MÜLLER, Hans-Joachim, D-55543 Bad Kreuznach (DE); KIRSCHNER, Markus, D-55120 Mainz (DE); HOLZKI, Udo, D-55286 Wörrstadt (DE)
(74) Vertreter: Fuchs, Luderschmidt & Partner Patentanwälte
(86) Internationale Anmeldenummer: EP9403627
(87) Internationale Veröffentlichungsnummer: WO9514525

(56) Entgegenhaltungen:
- EP-A- 0 005 866
- EP-A- 0 096 306
- EP-A- 0 327 025
- EP-A- 0 571 871
- WO-A-92/07899
- DE-A- 4 007 383
- US-A- 3 710 945
- PATENT ABSTRACTS OF JAPAN vol. 15, no. 128 (C-818) 28. März 1991 & JP,A,03 012 223 (ASAHI CHEM IND CO LTD) 21. Januar 1991
- PATENT ABSTRACTS OF JAPAN vol. 15, no. 259 (C-846) 2. Juli 1991 & JP,A,03 086 206 (HIRASHIMA YOSHIRO)
- DATABASE WPI Section Ch, Week 9444, Derwent Publications Ltd., London, GB; Class D04, AN 94-353883 & JP,A,6 277 466 (TOYO ROSHI KK) 4. Oktober 1994

## Beschreibung

Die Erfindung betrifft ein Verfahren zur partiellen Modifizierung poröser, hydrophiler Filtermembranen, insbesondere zur Mikro- und Ultrafiltration, gemäß dem berbegriffvon Anspruch 1. Die Erfindung betrifft weiterhin solchermaßen nachbehandelt Filtermembranen und mit ihnen bestückte Filtrationsmodule, insbesondere Filterkerzen.

Poröse Filtermembranen werden aus den verschniedensten thermoplastischen Matrialien, wie solchen auf Basis von Zellulosederivaten, Polyamiden oder Polysulfonen hergestellt, welche die verschiedensten Porengrößen und Porengrößenverteilungen aufweisen, symmetrisch oder asymmetrisch sowie hydrophil oder hydrophob sein können. In der EP 96 306 werden solche Filtermembranen beschrieben.

Derartige Filtermembranen sind häufig spröde, mechanisch wenig belastbar und gegenüber einem Ein- bzw. Weiterreißen empfindlich, so daß bei ihrer Handhabung oder beim Einbau in Filtrationsmodule, wie Filterkerzen, Probleme auftreten. Insbesondere dann, wenn die Filtermembranen in plissierter Form in z.B. Filterkerzengehäusen durch Einbetten in kalt- oder warmhärtenden Mehrkomponentenharzen oder durch Einbetten in Schmelzen von synthetischen Thermoplasten und anschließendem Erstarren des Siegelmaterials fixiert werden, können Veränderungen ihrer physikalischen Eigenschaften innerhalb und unmittelbar außerhalb des Fixierungsbereiches eintreten. So kann beispielsweise eine Hydrophobierung hydrophiler Membranen auftreten. Bei der Einbettung von hydrophilen Filtermembranen, wie z.B. Nylonmembranen in hydrophobe Verankerungselemente, wie z.B. Endkappen aus Polypropylen, Polysulfon oder Polyethylenen werden die Membranfilter über den Einbettungsbereich hinaus in einer Randzone hydrophobiert, so daß diese nicht mehr durch Wasser benetzbare Randzone eine Vielzahl von Poren enthält, die beim Bubble-Point-Test bzw. Druckhaltetest (Integritätstest) von z.B. der Filterkerze einen Bypass für Luft darstellen und somit die Prüfbarkeit der Filterkerze unmöglich machen.

In der EP 96 306 wird die Randversiegelung von hydrophilen Membranfiltern, wie Nylonfiltern, durch einen heißsiegelbaren Polyesterfilm, welcher einseitig mit einem lösungsmittelfreien Polyethylenüberzug als Schmelzkleber versehen ist, beschrieben. Es wird auch erwähnt, daß eine Verringerung der Porosotät an den Randstreifen von Membranfiltern dadurch erreicht werden kann, daß diese mechanisch verpreßt werden, wodurch ein Zusammenbrechen der mikro- bzw. ultraporösen Filtermatrix über die gesamte Filterdicke erfolgt.

In der DE-OS 38 03 341 und EP 03 27 025 werden poröse Membranfilter beschrieben, die aufgrund einer Überführung der Struktur auf einer Membranseite in einen filmartigen Zustand fluidundurchlässige Stellen aufweisen. Der flüssige Zustand des Membranmaterials wird z.B. dadurch erzeugt, daß Dampf eines Lösungsmittels oder Lösungsmittelgemisches für das Membranfiltermaterial gezeilt auf die zu verfilmende Stelle auf einer Seite des Membranfilters einwirken gelassen und das Membranfiltermaterial bis zu der gewünschten Tiefe gelöst wird. Es werden auch Temperaturverfahren beschrieben, wobei diese Verfahren jedoch alle den Nachteil haben, daß die einseitige Versiegelung technologisch nur schwer durchführbar ist, die Membrane in ihrer Morphologie beeinflußt wird und keine vollständige Verankerung von Einbettungsmittel, zumindest auf der Verfilmungsseite der Membran erfolgt.

Die EP 00 36 315 erwähnt neben einem "Heißsiegel" - und einem mechanischen Verfahren einen Prozeß, bei dem der empfindliche Bereich der porösen Filtermembranen durch Vergießen mit Leim behandelt wird. Der Nachteil dieses Verfahrens liegt in der ungenügenden Temperaturstabilität der verleimten Membranzone bei Beaufschlagung mit mehrmaligen Dämpfzyklen bei 134° C.

Allen genannten Verfahren ist gemeinsam, daß die Membran in den einzubettenden Bereichen einseitig oder zweiseitig absolut undurchlässig ist, d.h. die Oberfläche derart versiegelt ist, daß kein hydrophobes Einbettungsmaterial mehr in die Membran eindringen kann.

Die JP-A-3012223 beschreibt ein Verfahren, wobei die Endbereiche von hydrophoben Hohlfasermembranen zunächst einer Oxidationsbehandlung unterzogen werden, damit der Klebstoff zum Verbinden der Hohlfasermembranen besser haftet.

Die JP-A-3086206 beschreibt ein Verfahren zur Herstellung plissierter hydrophober Membrane, deren Endbereiche in einem thermoplastischen Kunststoff eingebettet sind. Alle übrigen Bereiche außer diesen Endbereichen werden in einem Hydrophilierungsmittel getränkt.

Aufgabe der Erfindung ist daher die Bereitstellung eines Verfahrens zur Modifizierung hydrophiler Filtrationsmembranen, so daß diese selbst nach Einbettung von Teilbereichen in hydrophobes Polymermaterial über den gesamten Bereich ihrer wirksamen Fläche durchgängig porös und hydrophil bleiben, sowie eine solcherart modifizierte Filtermembran und ein damit bestücktes Filtrationsmodul, insbesondere eine Filterkerze.

Die Aufgabe wird verfahrensgemäß nach den kennzeichnenden Merkmalen des Patentanspruchs 1 gelöst, die erfindungsgemäße Filtermembran ist in Anspruch 13 und das Filtrationsmodul in Anspruch 19 charakterisiert. Vorteilhafte Ausgestaltungen sind Gegenstand der Unteransprüche.

Die porösen, hydrophilen Filtermembranen selbst, vorzugsweise mit Porengrößen für den Mikro- und Ultrafiltrationsbereich, welche beispielsweise aus Polysulfon mit Zusätzen von Polyvinylpyrrolidon,aus aliphatischen und aromatischen Polyamiden, oder aus Cellulosederivate bestehen können, werden nach bekannten Verfahren gemäß dem Stand der Technik hergestellt.

Als hydrophil im Sinne der vorliegenden Erfindung werden solche Membranen bezeichnet, welche nach Auflegen auf eine ruhende Wasseroberfläche bei Raumtemperatur (25° C) nach visueller Überprüfung innerhalb einer Minute an ihrer mit dem Wasser in Kontakt gekommenen Fläche vollständig, d.h. fleckenfrei, mit Wasser benetzt sind. Bei asymmetrischen Membranen wird dabei die die Trennschicht aufweisende Seite in Kontakt mit der Wasseroberfläche gebracht.

Die porösen, hydrophilen Filtermembranen werden in den für die Einbettung vorgesehenen Bereichen mit einer Lösung eines Hydrophilierungsmittels bis zur Sättigung getränkt und anschließend getrocknet.

Die erfindungsgemäß modifizierte hydrophile Membran sollte in ihrem imprägnierten und für die Einbettung vorgesehenen Bereich vorzugsweise mindestens um das doppelte hydrophiler sein als in den unbehandelten Membranbereichen. Der Grad der Hydrophilie wird dabei über den Unterschied der Eindringgeschwindigkeit eines Wassertropfens in jeweils einen modifizierten und nicht modifizierten Teil der Membran bestimmt. Die Eindringgeschwindigkeit wird gemäß dem in der EP 0 245 000 beschriebenen Verfahren bestimmt. Mittels einer Pipette werden bei Raumtemperatur jeweils ein Wassertropfen von 0,05 ml auf der Oberfläche des zu bestimmenden Membranbereichs bei waagerechter Orientierung der Membran aufgetragen und im Durchlicht sodann die Zeit gemessen, nach der die Membran im Bereich des aufgetragenen Wassertropfens durchscheinend wird. Dieser optische Übergang erfolgt schlagartig je nach Hydrophilie des jeweiligen Membranbereichs, im Falle hydrophiler Membranen nach obiger Definition im Zeitinterval zwischen 1/10 bis ca. 15 Sekunden.

Wichtig ist dabei, daß vor dieser Bestimmung die zu messende Membran einer Dampfbehandlung unterzogen wird, gefolgt von einer vollständigen Trocknung. Gemäß der vorliegenden Erfindung weist ein modifizierter Membranbereich im Vergleich mit einem nicht modifizierten Membranbereich eine n-fach größere Hydrophilie auf, wenn die Eindringzeit eines Tropfens von 0,05 ml gemäß obiger Messung nur 1/n der Zeit beträgt, welche für einen gleichgroßen Tropfen im nicht modifizierten Membranbereich gemessen wird.

Eine permanent hydrophile Membran auf Basis von Polysulfon wird in der unter Art. 54(3) fallenden Anmeldung EP-A-0 571 871 (übereinstimmend mit der deutschen Anmeldung 42 17 335) beschrieben. Als Polysulfone im Sinne der vorliegenden Erfindung werden auch Polyethersulfone und Polyarylsulfone gemäß der Definition der Food and Drug Administration, USA, verstanden (21 CFR Ch.I (4-1-89 Edition), § 177. 1560 bis § 177.2450). Im folgenden werden die nachstehenden Verbindungen durchwegs unter dem Begriff Polysulfon subsummiert:

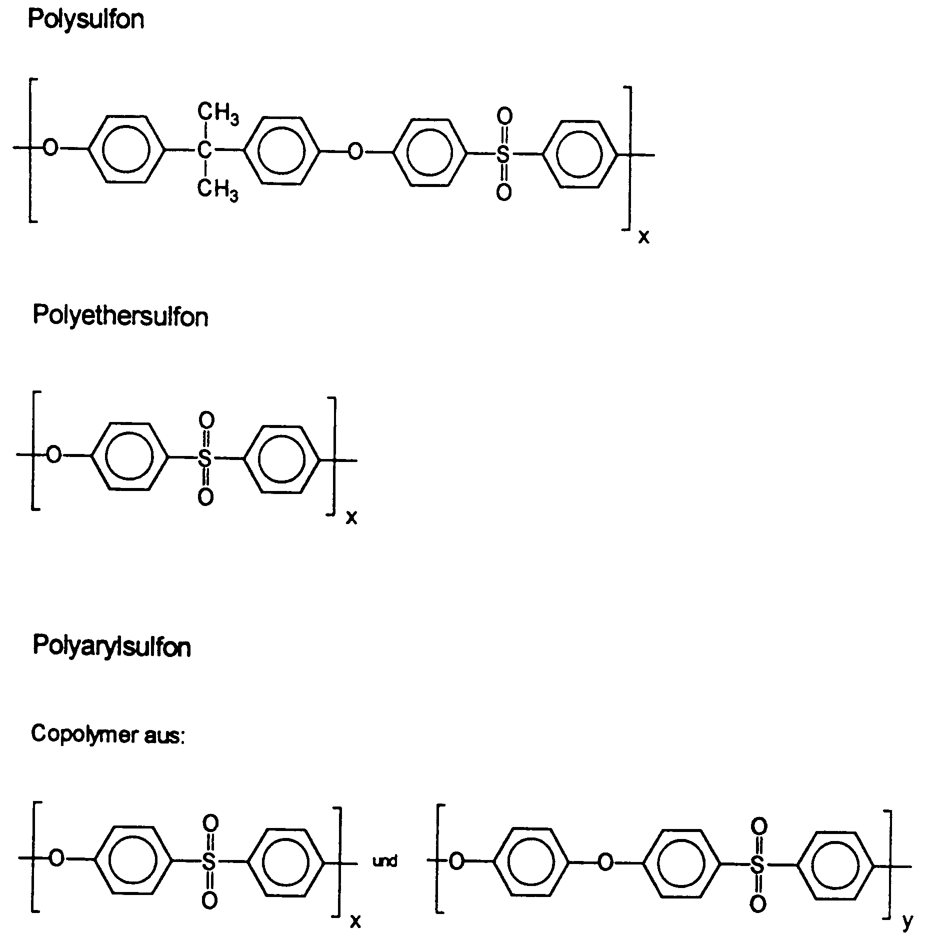

Erfindungsgemäß können die Membranen folgendermaßen nachbehandelt werden:
Die zu modifizierende hydrophile Membran wird an dem in das hydrophobe Polymermaterial, z.B. Polypropylen, Polysulfon oder Polyethylen einzubettenden Bereich, vorzugsweise dem Randbereich mit einer Hydrophilierungslösung getränkt. Hierzu wird die Membran mit ihrem Randbereich in ein Behandlungsbad getaucht.

Das Behandlungsbad (Imprägnierbad) kann aus einer Lösung von Polyvinylpyrrolidon, vorzugsweise mit einem mittleren Molekulargewicht von 360 000, einem Polyvinylpryrrolidon-Copolymer und einem Peroxodisulfat, vorzugsweise als Natrium-, Kalium- oder Ammoniumsalz in einer Mischung aus Wasser/Alkohol bestehen. Das Imprägnierbad kann vorzugsweise wie folgt hergestellt werden:

Polyvinylpyrrolidon wird zusammen mit dem Polyvinylpyrrolidon-Copolymer, welches seinerseits aus 5-80 Gew.-% Moromeranteilen an Vinylpyrrolidon und entsprechend 95-20 Gew.-% Vinylacetat hergestellt wird, in einem Gewichtsverhältnis PVP/Copolymer von 1:9 bis 9:1, vorzugsweise von 1:2 bis 2:1, in einer Mischung aus Wasser/Ethanol mit einem Gewichtsverhältnis von 10:1 bis 2:1, vorzugsweise 5:1 bis 3:1 gelöst, sodaß die Gesamtkonzentration von PVP + PVP-Copolymer in dem Lösungsmittelgemisch 1-8 Gew.-%, vorzugsweise 2-4 Gew.-% beträgt. Sodann wird soviel Peroxodisulfat zugesetzt, bis das gewichtsprozentuale Verhältnis von (Polyvinylpyrrolidon + PVP-Copolymer)/Peroxodisulfat sich auf 4:1 bis 1:4, vorzugsweise 2:1 bis 1:2 beläuft. Die damit nachbehandelten Membranbereiche sollen dann mindestens um das doppelte hydrophiler sein als die nicht nachbehandelten Bereiche.

In das so hergestellte Imprägnierbad werden dann vorzugsweise bei Raumtemperatur (25° C) die zu modifizierenden Bereiche, vorzugsweise die Ränder der hydrophilen Membran soweit eingetaucht, wie die Membranränder später in das hydrophobe Polymermaterial eingebettet werden sollen. Werden die Membranen in noch nassem Zustand in das Imprägnierbad getaucht, sollte die Imprägnierzeit mindestens 5- ca. 60 Sekunden betragen, bei zuvor getrockneten Membranen reduziert sich die Imprägrierzeit auf das Zeitintervall von mindestens 2 bis zu 10 Sekunden. Nach dem Imprägnieren wird die Membran bei einer Temperatur zwischen 70 und 150° C, vorzugsweise 80-110° C über einen Zeitraum von bis zu 160 Minuten, vorzugsweise 2 bis 10 Minuten, getrocknet.

Beim Einbetten der solchermaßen nachbehandelten Membranen in hydrophobes Polymermaterial, z.B. beim Einbau in Filterkerzen, muß streng darauf geachtet werden, daß nur nachimprägnierte Bereiche eingebettet werden. Vorsichtshalber sollte darum etwa 5-20 % des imprägnierten Bereichs nachher aus dem hydrophoben Einbettungsmaterial herausragen, um auf jeden Fall zu verhindern, daß das hydrophobe PolymermateriaI in den nicht modifizierten Membranbereich eindringen kann. Selbstverständlich soll die über die Imprägnierung erreichte weitere Hydropohilierung vor einer eventuellen Weiterbearbeitung der Filtermembran durchgeführt werden, sie kann jedoch auch am Plissierpaket selbst vor oder nach dem Längsnahtschweißen erfolgen. Auf jeden Fall muß die zusätzliche Hydrophilierung von Teilbereichen jedoch am Halbfabrikat vor der Einbettung in die Endkappen einer Filterkerze durchgeführt sein.

Im folgenden wird die Erfindung anhand von Beispielen näher erläutert.

### Beispiel 1:

Eine Membran aus aromatischem Polysulfon (Ansatz: 30 g Polysulfon P 1800 + 0,6 g Polyvinylpyrrolidon (Kollidon K 90) in 100 g N-Methylpyrrolidon und 190 g Polyethylenglykol (Pluriol 400)) wird durch Eintauchen über einen Zeitraum von 5 Sekunden in eine H₂O/EtOH-Lösung (Volumenverhältnis 4:1) aus 0,3 % Polyvinylpyrrolidon K 90 und 0,3 % eines Copolymers (Vinylpyrrolidon/Vinylacetat im Verhältnis 1:1) sowie 0,5 % Natriumperoxodisulfat und anschließendem Trocknen bei 90° C permanent hydrophiliert. Die Membran wird während des Produktionsprozesses kontinuierlich auf eine vorbestimmte Breite geschnitten und auf einen Kunststoffkern zu einer Rolle aufgewickelt. Die Membran weist einen Blaspunkt von 3,6 bar und einen Wasserfluß von 16,7 ml/(cm²min bar) auf. Diese Rolle wird in einer entsprechenden Vorrichtung nachbehandelt, indem die Membranbahn über ein entsprechend gebautes Imprägnierbad und einen Walzentrockner geführt und sodann erneut aufgewickelt wird. Die Imprägniervorrichtung ist so gestaltet, daß nur etwa 2 cm vom linken und rechten Band der Membran mit dem Imprägnierbad behandelt werden. Das Imprägnierbad setzt sich wie folgt zusammen:
- 1,5 Gew-%: Polyvinylpyrrolidon K 120
- 1,5 Gew.-%: eines Copolymers, bestehend aus Polyvinylpyrrolidon und Polyvinylacetat im Gewichtsverhältnis 1:1, und
- 3 Gew.-%: Natriumperoxodisulfat.

Das Lösungsmittel besteht aus 18,8 Gew-% Ethanol und 75,2 Gew.-% Wasser.

Bis auf das Trocknen der Membran finden alle Prozeßschritte bei Raumtemperatur (ca 25 C°) statt. Der Walzentrockner hat eine Temperatur im Bereich von 95 - 110°C. Die Geschwindigkeit der Membranbahn wird so eingestellt, daß die Membran nach dem Verlassen des Trockners vollständig trocken ist (ca. 1,5 - 3 m/min).

Test auf Hydrophilierung der modifizierten Membran:
Aus der nach Beispiel 1 hergestellten Membran werden zu Testzwecken Proben entnommen, indem kreisrunde Scheiben mit einem Durchmesser von 50 mm aus der Membranbahn ausgestanzt werden. Die Proben werden so entnommen, daß sie sowohl imprägnierte Randbereiche als auch nicht imprägnierte Membranbereiche einschließen, so daß in einer Probe sowohl ursprüngliche als auch nachbehandelte Membranflächen vorliegen. Diese Proben werden in einem Filterhalter eingespannt und während einer halben Stunde bei einem Druck von 2 bar (121° C) und einem Differenzdruck von 0,2 bar einer Wasserdampfbehandlung unterzogen. Anschließend werden die Membranproben auf einem Walzentrockner bei 110° C vollständig getrocknet.

Von diesen getrockneten Proben wird die Eindringgeschwindigkeit eines Wassertropfens in die einzelnen Zonen der Membran gemessen. Hierzu wird aus einer Polypropylen-Pipette jeweils ein Wassertropfen von ca. 0,05 ml auf die waagerecht gehaltene Membranoberfläche aufgetragen und sodann im Durchlicht die Zeit bestimmt, nach der die Membran im Bereich des Wassertropfens gerade durchscheinend wurde.

Gemessene Daten:
Eindringzeit im Randbereich: < 1 Sekunde
Eindringzeit in unbehandelten Membranbereichen: 10 sec.

Die imprägnierten Randbereiche wiesen also eine über zehnach höhere Hydrophilie auf als die nicht behandelten Membranbereiche.

### Beispiel 2:

Eine nach Beispiel 1 mit verschiedenen Konzentrationen der Mischung aus Polyvinylpyrrolidon + Copoymer behandelte Membran wurde in Filterkerzen eingebaut und entsprechend vermessen. Zu Vergleichszwecken wurde eine Membran ohne randimprägnierte Bereiche entsprechend in Membranfilterkerzen verarbeitet.

Die Benetzung dieser Filterkerzen wurde sodann mittels Luftdiffusionsmessung (Druckhaltetest oder Integritätstest) jeweils nach Benetzung unter den folgenden Bedingungen geprüft:
- a: Benetzung in einem Wasserbad bei Atmosphärendruck über einen Zeitraum von 30 Minuten
- b: Spülen mit Wasser bei einer Druckdifferenz von 0,5 bar über einen Zeitraum von 10 Minuten
- c: Spülen mit Wasser bei einem Differenzdruck von 1,0 bar über einen Zeitraum von 10 Minuten
- d: Spülen mit Wasser bei einem Differenzdruck von 4,0 bar über einen Zeitraum von 10 Minuten
- e: Spülen mit Wasser bei einem Differenzdruck von 0,3 bar über einen Zeitraum von 10 Minuten, sodann Wasserdampfbehandlung bei einem Überdruck von 0,5 bar über einen Zeitraum von 20 Minuten gefolgt von erneutem Spülen mit Wasser bei einem Differenzdruck von 0,3 bar über einen Zeitraum von 10 Minuten.

**Tabelle 1**

| Durchschnittswerte der gemessenen Luftdiffusion (ml/min) von 8 Filterkerzen mit Membranen, deren Randbereiche in einer Lösung mit einem Gehalt von 1 Gew.-% PVP + Copolymer nachimprägniert wurden. | | | | | |
|---|---|---|---|---|---|
| Benetzungsbedingungen | a | b | c | d | e |
| Filterkerzen, enthaltend Membranen mit unbehandelten Randbereichen | nicht meßbar * | nicht meßbar * | nicht meßbar * | 81 | 17 |
| Filterkerzen, enthaltend Membranen mit nachbehandelten Randbereichen | 60 | 45 | 25 | 15 | 14 |

| | | | | | |
|---|---|---|---|---|---|
| *nicht meßbar bedeutet, daß der ermittelte Wert über der Erfassungsgrenze von 100 ml/min liegt. | | | | | |

**Tabelle 2**

| Durchschnittswerte der gemessenen Luftdiffusion (ml/min) von 8 Filterkerzen mit Membranen, deren Randbereiche in einer Lösung mit einem Gehalt von 3 Gew.-% PVP + Copolymer nachimprägniert wurden | | | | | |
|---|---|---|---|---|---|
| Benetzungsbedingungen | a | b | c | d | e |
| Filterkerzen, enthaltend Membranen mit unbehandelten Randbereichen | nicht meßbar * | nicht meßbar * | nicht meßbar * | 75 | 15 |
| Filterkerzen, enthaltend Membranen mit nachbehandelter Randbereichen | 22 | 16 | 13 | 9 | 9 |

| | | | | | |
|---|---|---|---|---|---|
| *nicht meßbar bedeutet, daß der ermittelte Wert über der Erfassungsgrenze von 100 ml/min liegt. | | | | | |

**Tabelle 3**

| Durchschnittswerte der gemessenen Luftdiffusion (ml/min) von 8 Filterkerzen mit Membranen, deren Randbereiche in einer Lösung mit einem Gehalt von 6 Gew.-% PVP + Copolymer nachimprägniert wurden | | | | | |
|---|---|---|---|---|---|
| Benetzungsbedingungen | a | b | c | d | e |
| Filterkerzen, enthaltend Membranen mit unbehandelten Randbereichen | nicht meßbar * | nicht meßbar * | nicht meßbar * | 69 | 18 |
| Filterkerzen, enthaltend Membranen mit nachbehandelten Randbereichen | 21 | 15 | 11 | 9 | 9 |

| | | | | | |
|---|---|---|---|---|---|
| *nicht meßbar bedeutet, daß der ermittelte Wert über der Erfassungsgrenze von 100 ml/min liegt. | | | | | |

Die Filterkerzen, in welchen Membranen mit imprägniertem Randbereich enthalten sind, zeigen deutliche Benetzungsvorteile. Nach ein bis zweimaliger Wiederholung der Versuche a-e, wobei die Filterkerzen jeweils vor jeder neuen Benetzung getrocknet wurden, zeigt sich der gleiche Effekt.

## Patentansprüche

1. Verfahren zur partiellen Modifizierung einer porösen Filtermembran, insbesondere für die Mikro- und Ultrafiltration, zur Einbettung der modifizierten Bereiche in hydrophobes Polymermaterial in Filtrationsmodulen, insbesondere in Filterkerzen, wobei die Filtermembran vor der Modifizierung an sich so hydrophil ist, daß sie nach Auflage auf eine ruhende Wasseroberfläche bei 25 °C nach einer Minute an ihrer mit dem Wasser in Kontakt gekommenen Fläche vollständig mit Wasser benetzt ist, dadurch gekennzeichnet,
daß die poröse Filtermembran in den für die Einbettung vorgesehenen Bereichen mit einer Lösung eines Hydrophilierungsmittels bis zur Sättigung getränkt und sodann getrocknet wird.

2. Verfahren nach Anspruch 1, dadurch gekennzeichnet, daß als Hydrophilierungsmittel eine Mischung aus Polyvinylpyrrolidon, einem Polyvinylpyrrolidon-Copolymer und einem Peroxodisulfat verwendet wird, welche in einem Wasser/Ethanol-Gemisch in einer solchen Menge gelöst werden, daß die hydrophil modifizierten Bereiche eine mindestens um das doppelte größere Hydrophilie aufweisen als die nicht modifizierten Bereiche.

3. Verfahren nach den Ansprüchen 1 und 2, dadurch gekennzeichnet, daß das gewichtsprozentuale Verhältnis von PVP/Copolymer im Bereich von 1:9 bis 9:1, die Gesamtkonzentration von Polyvinylpyrrolidon + Copolymer in der Lösung im Bereich von 1-8 Gew.-% und das gewichtsprozentuale Verhältnis (Polyvinylpyrrolidon + Copolymer)/Peroxodisulfat im Bereich von 4:1 bis 1:4 liegen und das Verhältnis von Wasser/Ethanol im Lösungsmittel ein Gewichtsverhältnis im Bereich von 10:1 bis 3:1 aufweist.

4. Verfahren nach den Ansprüchen 1-3, dadurch gekennzeichnet, daß das gewichtsprozentuale Verhältnis von Polyvinylpyrrolidon/Copolymer im Bereich von 1:2 bis 2:1, die Gesamtkonzentration von Polyvinylpyrrolidon + Copolymer in der Lösung im Bereich von 2 - 4 Gew.-% und das gewichtsprozentuale Verhältnis (Polyvinylpyrrolidon + Copolymer)/Peroxodisulfat im Bereich von 2:1 bis 1:2 liegen und das Verhältnis von Wasser/Ethanol im Lösungsmittel ein Gewichtsverhältnis im Bereich von 5:1 bis 3:1 aufweist.

5. Verfahren nach den Ansprüchen 1-4, dadurch gekennzeichnet, daß das gewichtsprozentuale Verhältnis von Polyvinylpyrrolidon/Copolymer 1:1, die Gesamtkonzentration von Polyvinylpyrrolidon + Copolymer in der Lösung 3 Gewichtsprozent und das gewichtsprozentuale Verhältnis (Polyvinylpyrrolidon + Copolymer)/Natriumperoxodisulfat 1:1 betragen und das Verhältnis von Wasser/Ethanol im Lösungsmittel ein Gewichtsverhältnis von 4:1 aufweist.

6. Verfahren nach jedem der Ansprüche 1-5, dadurch gekennzeichnet, daß eine Filtermembran mit Polysulfon als Matrixmaterial eingesetzt wird.

7. Verfahren nach jedem der Ansprüche 1-5, dadurch gekennzeichnet, daß eine Filtermembran mit aliphatischem Polyamid als Matrixmaterial eingesetzt wird.

8. Verfahren nach jedem der Ansprüche 1-5, dadurch gekennzeichnet, daß eine Filtermembran mit aromatischem Polyamid als Matrixmaterial eingesetzt wird.

9. Verfahren nach jedem der Ansprüche 1-5, dadurch gekennzeichnet, daß eine Filtermembran mit einem Matrixmaterial auf Basis von Cellulosederivaten eingesetzt wird.

10. Verfahren nach einem der Ansprüche 1-9, dadurch gekennzeichnet, daß die partielle Modifizierung vor der Weiterbehandlung des Membranfilters durchgeführt wird.

11. Verfahren nach einem der Ansprüche 1-10, dadurch gekennzeichnet, daß die Modifizierung am Plissierpaket vor oder nach dem Längsnahtschweißen durchgeführt wird.

12. Verfahren nach einem der Ansprüche 1-11, dadurch gekennzeichnet, daß die Modifizierung am Halbfabrikat vor der Einbettung in das hydrophobe Polymermaterial erfolgt.

13. Poröse Filtermembran, insbesondere für die Mikro- und Ultrafiltration, die so hydrophil ist, daß sie nach Auflage auf eine ruhende Wasseroberfläche bei 25 °C nach einer Minute an ihrer mit dem Wasser in Kontakt gekommenen Fläche vollständig mit Wasser benetzt ist, dadurch gekennzeichnet,
daß in den zur Einbettung in hydrophobes Polymermaterial von Filtrationsmodulen, insbesondere von Filterkerzen, vorgesehenen Bereichen der Filtermembran die Innenwände der Poren mit einem solchen Material ausgekleidet sind, daß diese Bereiche hydrophiler sind als die übrigen Bereiche der Filtermembran, wobei Unterschiede in der Hydrophilie über unterschiedliche Eindringgeschwindigkeiten eines Wassertropfens in jeweils einen modifizierten und nicht modifizierten Bereich der Membran feststellbar sind.

14. Filtermembran nach Anspruch 13, dadurch gekennzeichnet, daß die Poreninnenwände in den hydrophil modifizierten Bereichen mit einer solchen Menge an hydrophilem Material ausgekleidet sind, daß diese Bereiche um das mindestens doppelte hydrophiler als die nicht modifizierten Bereiche der Filtermembran sind.

15. Filtermembran nach den Ansprüchen 13 und 14, dadurch gekennzeichnet, daß sie Polysulfon als Matrixmaterial enthält.

16. Filtermembran nach den Ansprüchen 13 und 14, dadurch gekennzeichnet, daß sie aliphatisches Polyamid als Matrixmaterial enthält.

17. Filtermembran nach den Ansprüchen 13 und 14, dadurch gekennzeichnet, daß sie aromatisches Polyamid als Matrixmaterial enthält.

18. Filtermembran nach den Ansprüchen 13 und 14, dadurch gekennzeichnet, daß sie ein Matrixmaterial auf Basis von Cellulosederivaten enthält.

19. Fitrationsmodul, enthaltend eine Filtermembran gemäß einem der Ansprüche 13-18, welche mit ihren modifizierten Bereichen in Verankerungselemente aus hydrophobem Polymermaterial eingebettet ist.

20. Filtrationsmodul nach Anspruch 19, dadurch gekennzeichnet, daß die Verankerungselemente Endkappen von Filterkerzen sind.

21. Filtrationsmodul nach den Ansprüchen 19 und 20, dadurch gekennzeichnet, daß die Verankerungselemente aus Polypropylen bestehen.

22. Filtrationsmodul nach den Ansprüchen 19 und 20 dadurch gekennzeichnet, daß die Verankerungselemente aus Polysulfon bestehen.

23. Filtrationsmodul nach den Ansprüchen 19 und 20, dadurch gekennzeichnet, daß die Verankerungselemente aus Polyethylen bestehen.

## Claims

1. A process for the partial modification of a porous filter membrane, in particular for micro- and ultrafiltration, for embedding the modified areas in hydrophobic polymer material in filtration modules, in particular in filter cartridges, wherein, prior to the modification, the filter membrane is so hydrophilic per se, that after being applied to a still water surface at 25°C, the surface which has come into contact with the water is completely wetted with water after one minute, characterised in that the porous filter membranes are, in the areas which are provided for the embedding, soaked until saturation with a solution of a hydrophilic agent and then dried.

2. A process according to Claim 1, characterised in that there is used as the hydrophilic agent, a mixture of polyvinylpyrrolidone, a polyvinylpyrrolidone copolymer and a peroxodisulphate, which substances are dissolved in a water/ethanol mixture in an amount such that the hydrophilically, modified areas have a hydrophillicity which is at least twice as high as the areas which have not been modified.

3. A process according to Claims 1 and 2, characterised by the fact that the weight percentage ratio of PVP/copolymer is in the range from 1:9 to 9:1, the total concentration of polyvinylpyrrolidone + copolymer in the solution is in the range of 1-8 weight %, and the weight percentage ratio (polyvinylpyrrolidone + copolymer)/peroxodisulphate is in the range of from 4:1 to 1:4, and the water/ethanol ratio in the solvent has a weight ratio in the range of from 10:1 to 3:1.

4. A process according to Claims 1 to 3, characterised in that the weight percentage ratio of polyvinylpyrrolidone/copolymer is in the range of from 1:2 to 2:1, the total concentration of polyvinylpyrrolidone + copolymer in the solution is in the range of from 2 to 4 weight % and the weight percentage ratio (polyvinylpyrrolidone + copolymer)/peroxodisulphate is in the range of from 2:1 to 1:2, and the water/ethanol ratio in the solvent is in the range of from 5:1 to 3:1 by weight.

5. A process according to Claims 1 to 4, characterised in that the ratio, in weight percent, of polyvinylpyrrolidone/copolymer is 1:1, the total concentration of polyvinylpyrrolidone + copolymer in the solution is 3 weight % and the ratio in weight % (polyvinylpyrrolidone + copolymer)/sodium peroxide sulphate is 1:1, and the ratio of water/ethanol in the solvent has a weight ratio of 4:1.

6. A process according to each of Claims 1 to 5, characterised in that a filter membrane with polysulphone as the matrix material is used.

7. A process according to all of Claims 1 to 5, characterised in that a filter membrane with aliphatic polyamide as the matrix material is used.

8. A process according to all of Claims 1 to 5, characterised in that a filter membrane with aromatic polyamide as the matrix material is used.

9. A process according to all of Claims 1 to 5, characterised in that a filter membrane which has a matrix material based on cellulose derivatives is used.

10. A process according to one of Claims 1 to 9, characterised in that the partial modification is performed prior to the subsequent treatment of the membrane filter.

11. A process according to all of Claims 1 to 10, characterised in that the modification is performed at a pleated pile before or after the longitudinal seam soldering.

12. A process according to any one of Claims 1 to 11, characterised in that the modification is performed on the semi-finished product prior to the embedding in the hydrophobic polymer material.

13. A porous filter membrane, in particular for micro and ultrafiltration, which is so hydrophilic that, after application to a still water surface at 25°C, the surface thereof which has come into contact with the water, is, after one minute, completely wetted with water, characterised in that in the areas of the filter membrane which are to be embedded in hydrophobic polymer material of filtration modules, in particular filter cartridges, the inner walls of the pores are lined with a material of such a type that these areas are more hydrophilic than the remaining areas of the filter membrane, wherein differences in the hydrophilicity may be established by different speeds of penetration of a water drop into a modified and a not modified area of the membrane in each case.

14. A filter membrane according to Claim 13, characterised in that the pore inner walls are cladded, in the hydropholically modified areas, with such an amount of hydrophilic material that these areas are at least twice as hydrophilic as the areas of the filter membrane which have not been modified.

15. A filter membrane according to Claims 13 and 14, characterised in that they contain polysulphone as the matrix material.

16. A filter membrane according to Claims 13 and 14, characterised in that it contains aliphatic polyamide as the matrix material.

17. A filter membrane according to Claims 13 and 14, characterised in that it contains aromatic polyamide as the matrix material.

18. A filter membrane according to Claims 13 and 14, characterised in that it contains a matrix material on the basis of cellulose derivatives.

19. A filtration module, containing a filter membrane according to one of Claims 13 to 18, which is embedded with its modified areas in securing elements of hydrophobic polymer materials.

20. A filtration module according to Claim 19, characterised in that the securing components are the end flaps of filter cartridges.

21. A filtration module according to Claims 19 and 20, characterised in that the securing elements consist of polypropylene.

22. A filtration module according to Claims 19 and 20, characterised in that the anchoring elements consist of polysulphone.

23. A filtration module according to Claims 19 and 20, characterised in that the securing components consist of polyethylene.

## Revendications

1. Procédé de modification partielle d'une membrane filtrante poreuse, en particulier pour la microfiltration et l'ultrafiltration, pour l'enrobage des zones modifiées dans une matière polymère hydrophobe dans des modules de filtration, en particulier dans des chandelles filtrantes, la membrane filtrante ayant en soi, avant la modification, un caractère hydrophile tel que, après avoir été déposée sur une surface d'eau en repos à 25°C, elle est entièrement mouillée sur la surface en contact avec l'eau au bout d'une minute,
caractérisé en ce que l'on imprègne à saturation la membrane filtrante poreuse dans les zones prévues pour l'enrobage avec une solution d'un agent d'hydrophilisation, puis on la sèche.

2. Procédé selon la revendication 1, caractérisé en ce que l'on utilise comme agent d'hydrophilisation un mélange de polyvinylpyrrolidone, d'un copolymère de polyvinylpyrrolidone et d'un peroxodisulfate, dissous dans un mélange eau/éthanol en une quantité telle que les zones à modification hydrophile présentent une hydrophilie au moins double de celle des zones non modifiées.

3. Procédé selon les revendications 1 et 2, caractérisé en ce que le rapport des pourcentages en masse PVP/copolymère est compris entre 1:9 et 9:1, la concentration totale de la polyvinylpyrrolidone + le copolymère dans la solution est comprise entre 1 et 8 % en masse et le rapport des pourcentages en masse (polyvinylpyrrolidone + copolymère)/peroxodisulfate est compris entre 4:1 et 1:4, et le rapport eau/éthanol dans le solvant est un rapport en masse compris entre 10:1 et 3:1.

4. Procédé selon les revendications 1 à 3, caractérisé en ce que le rapport des pourcentages en masse polyvinylpyrrolidone/copolymère est compris entre 1:2 et 2:1, la concentration totale de la polyvinylpyrrolidone + le copolymère dans la solution est comprise entre 2 et 4 % en masse et le rapport des pourcentages en masse (polyvinylpyrrolidone + copolymère)/peroxodisulfate est compris entre 2:1 et 1:2, et le rapport eau/éthanol dans le solvant est un rapport en masse compris entre 5:1 et 3:1.

5. Procédé selon les revendications 1 à 4, caractérisé en ce que le rapport des pourcentages en masse polyvinylpyrrolidone/copolymère est de 1:1, la concentration totale de la polyvinylpyrrolidone + le copolymère dans la solution est de 3 % en masse et le rapport des pourcentages en masse (polyvinylpyrrolidone + copolymère)/peroxodisulfate de sodium est de 1:1, et le rapport eau/éthanol dans le solvant est un rapport en masse de 4:1.

6. Procédé selon chacune des revendications 1 à 5, caractérisé en ce que l'on utilise une membrane filtrante dont la matière de matrice est une polysulfone.

7. Procédé selon chacune des revendications 1 à 5, caractérisé en ce que l'on utilise une membrane filtrante dont la matière de matrice est un polyamide aliphatique.

8. Procédé selon chacune des revendications 1 à 5, caractérisé en ce que l'on utilise une membrane filtrante dont la matière de matrice est un polyamide aromatique.

9. Procédé selon chacune des revendications 1 à 5, caractérisé en ce que l'on utilise une membrane filtrante dont la matière de matrice est à base de dérivés de cellulose.

10. Procédé selon l'une des revendications 1 à 9, caractérisé en ce que la modification partielle s'effectue avant le traitement ultérieur du filtre à membrane.

11. Procédé selon l'une des revendications 1 à 10, caractérisé en ce que la modification s'effectue sur un paquet plissé avant ou après le soudage longitudinal.

12. Procédé selon l'une des revendications 1 à 11, caractérisé en ce que la modification s'effectue sur le demi-produit avant l'enrobage dans la matière polymère hydrophobe.

13. Membrane filtrante poreuse, en particulier pour la microfiltration et l'ultrafiltration, qui a un caractère hydrophile tel que, après avoir été déposée sur une surface d'eau en repos à 25°C, elle est entièrement mouillée sur la surface en contact avec l'eau au bout d'une minute,
caractérisée en ce que, dans les zones de la membrane filtrante destinées à être enrobées dans une matière polymère hydrophobe de modules de filtration, en particulier de chandelles filtrantes, la paroi interne des pores est revêtue d'un produit tel que ces zones sont plus hydrophiles que les autres zones de la membrane filtrante, les différences du caractère hydrophile pouvant être déterminées par la différence des vitesses de pénétration d'une goutte d'eau dans une zone modifiée et une zone non modifiée de la membrane.

14. Membrane filtrante selon la revendication 13, caractérisée en ce que la paroi interne des pores dans les zones à modification hydrophile est revêtue d'une quantité de produit hydrophile telle que ces zones sont au moins deux fois plus hydrophiles que les zones non modifiées de la membrane filtrante.

15. Membrane filtrante selon les revendications 13 et 14, caractérisée en ce qu'elle contient une polysulfone comme matière de matrice.

16. Membrane filtrante selon les revendications 13 et 14, caractérisée en ce qu'elle contient un polyamide aliphatique comme matière de matrice.

17. Membrane filtrante selon les revendications 13 et 14, caractérisée en ce qu'elle contient un polyamide aromatique comme matière de matrice.

18. Membrane filtrante selon les revendications 13 et 14, caractérisée en ce qu'elle contient un matériau de matrice à base de dérivés de cellulose.

19. Module de filtration contenant une membrane filtrante selon l'une des revendications 13 à 18, dont les zones modifiées sont enrobées dans des éléments de fixation constitués d'une matière polymère hydrophobe.

20. Module de filtration selon la revendication 19, caractérisé en ce que les éléments de fixation sont des calottes aux extrémités de chandelles filtrantes.

21. Module de filtration selon les revendications 19 et 20, caractérisé en ce que les éléments de fixation sont constitués de polypropylène.

22. Module de filtration selon les revendications 19 et 20, caractérisé en ce que les éléments de fixation sont constitués de polysulfone.

23. Module de filtration selon les revendications 19 et 20, caractérisé en ce que les éléments de fixation sont constitués de polyéthylène.
